# EUROPÄISCHE PATENTSCHRIFT

(11) **EP 0 418 415 B1**
(45) Veröffentlichungstag und Bekanntmachung des Hinweises auf die Patenterteilung: **16.02.1994**
(21) Anmeldenummer: 89117406.2
(22) Anmeldetag: 20.09.1989
(51) Int. Cl.: A47C 17/84, A47C 19/00, F16C 11/10

(54) **Schwebebett**
Elevation bed
Lève-lit

(43) Veröffentlichungstag der Anmeldung: 27.03.1991
(73) Patentinhaber: Vilsmeier, Gerhart W., D-63741 Aschaffenburg (DE)
(72) Erfinder: Wünschmann, H., D-8000 München 83 (DE); Vilsmeier, Gerhart W., D-63741 Aschaffenburg (DE)
(74) Vertreter: Grünecker, Kinkeldey, Stockmair & Schwanhäusser Anwaltssozietät

(56) Entgegenhaltungen:
- FR-A- 2 584 283
- GB-A- 2 099 789
- US-A- 3 661 228

## Beschreibung

Die Erfindung betrifft ein Schwebebett nach dem Oberbegriff des Anspruchs 1.

Aus dem DE-U-19 62 618 ist bereits ein Schwebebett mit einem höhenverstellbaren Bettrahmen und einer Hubvorrichtung zum Bewegen des Bettrahmens in vertikaler Richtung bekannt. Die Hubvorrichtung enthält vier Seiltrommeln, die auf einer gemeinsamen an der Decke drehbar befestigten Welle angeordnet und mit jeweils einem Ende eines Tragseiles verbunden sind. Drei der vier Tragseile sind mit ihrem anderen Ende über Umlenkrollen, die ebenfalls an der Decke drehbar befestigt sind, mit den Stirnseiten des Bettrahmens verbunden. Das Endes des vierten Tragseils ist über Umlenkrollen mit einem Gewicht für den Bettrahmen verbunden und weist zusätzlich einen Handgriff zum Bewegen des Bettrahmens in vertikaler Richtung auf. Befindet sich der Bettrahmen in seiner Aufbewahrungsposition an der Decke, so sind die drei Tragseile auf den dazu gehörenden Seiltrommeln aufgewickelt, während das vierte Tragseil mit dem Handgriff von der dazugehörigen Seiltrommel abgewickelt ist. Wird das vierte Tragseil am Handgriff nach oben geschoben, so verändert sich das Kräftegleichgewicht zwischen dem Bettrahmen und dem Gegengewicht, wodurch das vierte Tragseil auf der entsprechenden Seiltrommel aufgewickelt wird. Gleichzeitig wird dadurch die Welle angetrieben und die drei Tragseile von den entsprechenden Seilrollen abgewickelt. Damit wird der mit diesen drei Tragseilen verbundene Bettrahmen in die Benutzposition abgesenkt. Unter Verwendung von zwei an der Wand befestibaren Anschlagwinkeln mit jeweils einer Zentrierbohrung und zwei an der Unterseite der wandseitigen Bettrahmenstirnseite angeordneten kegelförmigen Zentrierstiften wird ein Schwingen des Bettes in horizontaler Richtung nur in der Benutzerposition verhindert, in der die kegelförmigen Zentrierstifte in die Zentrierbohrung der Anschlagwinkel eingreifen. Im übrigen vertikalen Hubbereich ist das Bett nicht gegen eine Bewegung in horizontaler Richtung gesichert. Darüber hinaus können die Tragseile durch die natürliche Abnutzung reißen, wodurch die sich im Bereich des Bettes aufhaltenden Personen gefährdet werden.

Aus FR-A1-2 584 283 ist ein Schwebebett bekannt, das an den vier Ecken mit je einer Spindel versehen ist, an denen jeweils Spindelmuttern angeordnet sind, auf denen der Bettrahmen ruht. Um den Bettrahmen in vertikaler Richtung zu verschieben, müssen alle vier Spindeln synchron angetrieben werden, was über ein mit Kegelrädern versehenes Gestänge erfolgt. Als nachteilig bei diesem Schwebebett ist es anzusehen, daß auch nach Anheben des Bettrahmens immer noch die vier als Pfosten dienenden Spindeln im Raum stehen, wobei die jeweiligen Spindeln, die in umittelbarer Nachbarschaft zu einer Raumwand angeordnet sind, als weniger störend empfunden werden; mindestens eine der Spindeln steht dann aber noch störend im Raum.

Der Erfindung liegt die Aufgabe zugrunde, ein Schwebebett anzugeben, das sicher in jeder vertikalen Position benutzbar und raumsparend ausgebildet ist.

Diese Aufgabe wird ausgehend vom Oberbegriff des Anspruchs 1 mit dessen kennzeichnenden Merkmalen gelöst.

Der vorliegenden Erfindung liegt die Erkenntnis zugrunde, daß das angegebene Schwebebett sehr platzsparend und betriebssicher ist. Durch die Anordnung der Hubvorrichtung im Bereich der Führungseinrichtung beansprucht das Schwebebett praktisch keine Wohnfläche, wenn es unter die Zimmerdecke angehoben ist. Der selbsthemmende Antrieb macht es in jeder vertikalen Position betriebssicher und lagert es schwingungsfrei.

Die bevorzugte Ausführungsform nach Anspruch 2 hat den Vorteil, daß durch die Verwendung von zwei Führungsschienen mit jeweils einem L-förmigen Fußteil ein Verkippen der Führungseinrichtung in den Raum auf sehr einfache Weise verhindert und dadurch aufwendige Sicherheitsmaßnahmen überflüssig macht. Für dieses Merkmal wird zusätzlicher Schutz geltend gemacht.

Die Weiterbildung nach Anspruch 3 hat den Vorteil, daß bei einer Fußlänge von 30cm ein optimaler Kippschutz erreicht wird, ohne daß der sich in den Raum erstreckende Fußteil stört.

Die Weiterbildung nach Anspruch 4 hat den Vorteil, daß die Führungsschiene mit einem L-förmigen Kopfteil auch an der Decke befestigt werden kann.

Die Weiterbildung nach Anspruch 5 hat den Vorteil, daß mit einem Kopfteil, das bis zur gegenüberliegenden Wand reicht, ebenfalls ein Kippen der Führungseinrichtung verhindert wird.

Die Weiterbildung nach Anspruch 6 hat den Vorteil, daß durch die Verwendung einer Zahnstange und einem am Bettrahmen angeordneten Antrieb mit einem selbsthemmenden Antriebsrad eine sehr kompakt gebaute Hubvorrichtung möglich ist, die im Bettrahmen integriert ist, wobei durch das selbsthemmende Antriebsrad eine Bremsung bzw. Blockierung des Antriebs überflüssig wird.

Die Weiterbildung nach Anspruch 7 hat den Vorteil, daß der Bettrahmen besonders einfach aufgebaut ist, wenn an der Stirnseite des Bettrahmens nur eine Hubspindelmutter angeordnet ist, die eine parallel zur Führungsschiene drehbar gelagerte, selbsthemmende Hubspindel kämmt.

Die Weiterbildung nach Anspruch 8 hat den Vorteil, daß das Schwebebett besonders schnell in vertikaler Richtung verstellt werden kann, wenn ein elektrischer Motor als Antrieb verwendet wird.

Die Weiterbildung nach Anspruch 9 hat den Vorteil, daß durch Verwendung von zwei Hubspindeln die Hubkraft auf die zwei Hubspindeln aufgeteilt wird und damit die Abmessungen der Hubspindeln und des anzutreibenden Motors kleiner werden.

Die Weiterbildung nach Anspruch 10 hat den Vorteil, daß durch die Verwendung einer Überlastschutzeinrichtung eine Deformierung des Bettrahmens, sowie der Führungseinrichtung verhindert wird, wenn eine vorbestimmte Belastung des Bettrahmens überschritten wird.

Die Weiterbildung nach Anspruch 11 hat den Vorteil, daß entsprechend der Konstruktion des Bettrahmens und der Führungseinrichtung die Überlastsicherung einstellbar ist.

Die Weiterbildung des Anspruchs 12 hat den Vorteil, daß mit dem ellipsenförmig ausgebildeten Ende des freistehenden Drehgelenkstückes die Kraft festgelegt werden kann, mit der die Überlastschutzsicherung in ihre Verriegelungsstellung zurückgebracht wird und daß mit dem Einrasten des beweglichen Körpers in die Vertiefung die Überlastschutzeinrichtung auf besonders einfache Weise verriegelt wird, wobei durch die Form des beweglichen Körpers und der Vertiefung die Kraft, bei der die Überlastschutzsicherung anspricht, mitbeeinflußbar ist.

Die Weiterbildung des Anspruchs 13 hat den Vorteil, daß mit der verstellbaren Schraube und der daran angeordneten Feder eine besonders einfache Kraftübertragungseinrichtung realisierbar ist, bei der die Kraft, bei der die Überlastschutzsicherung anspricht auf besonders einfache Weise eingestellt werden kann.

Die Weiterbildung nach Anspruch 14 hat den Vorteil, daß mit dem Stopper ein vollständiges Herunterklappen des Bettrahmenteiles sowie eine Verletzung der auf dem herunterklappenden Bettrahmenteil befindlichen Personen verhindert wird.

Die Weiterbildung nach Anspruch 15 hat den Vorteil, daß mit den Führungsstangen, die durch eine Führungsbohrung des Bettrahmens verlaufen und parallel zur jeweiligen Führungsschiene befestigt sind, der Bettrahmen in horizontaler Richtung stabilisiert wird.

Die Weiterbildung nach Anspruch 16 hat den Vorteil, daß mit einem Lagesensor die vertikale Position des Bettrahmens erfaßt werden kann und daß durch das selbständige Anhalten des Bettrahmens an vorbestimmten Positionen, mittels der Steuereinrichtung, der Benützer auf bestimmte Gefahrenbereiche aufmerksam gemacht wird, wie z.B. leicht zerbrechliche Gegenstände, die sich unter dem Bettrahmen auf dem Boden befinden, und die beim Absenken des Schwebebettes zerstört werden können.

Die Weiterbildung nach Anspruch 17 hat den Vorteil, daß durch eine Endschalterkette der Lagesensor sehr einfach realisiert werden kann.

Die Weiterbildung nach Anspruch 18 hat den Vorteil, daß mit dem Sensor sehr leicht eine im Bett befindliche Person oder ein im Bett befindliches Tier detektierbar ist und daß in Abhängigkeit davon ein Absenken oder Hochfahren des Bettrahmens unterbunden werden kann.

Im folgenden werden drei Ausführungsbeispiele der Erfindung anhand von mehreren Zeichnungen näher erläutert. Es zeigt:
- Fig. 1: eine perspektivische Darstellung eines ersten Ausführungsbeispiels eines Schwebebettes im Raum,
- Fig. 2: eine perspektivische Darstellung eines zweiten Ausführungsbeispiels eines Schwebebettes im Raum,
- Fig. 3: eine perspektivische Darstellung einer Überlastschutzeinrichtung,
- Fig. 4: eine perspektivische Darstellung einer Führungsschiene und eines Teiles des daran gelagerten Bettrahmens,
- Fig. 5: eine perspektivische Darstellung eines anderen Ausführungsbeispiels einer Führungsschiene mit einem Teil des daran gelagerten Bettrahmens,
- Fig. 6: eine perspektivische Darstellung eines dritten Ausführungsbeispiels eines Schwebebettes im Raum,
- Fig. 7: einen Schaltplan für eine Steuereinrichtung zum Verstellen des Bettrahmens in vertikaler Richtung.

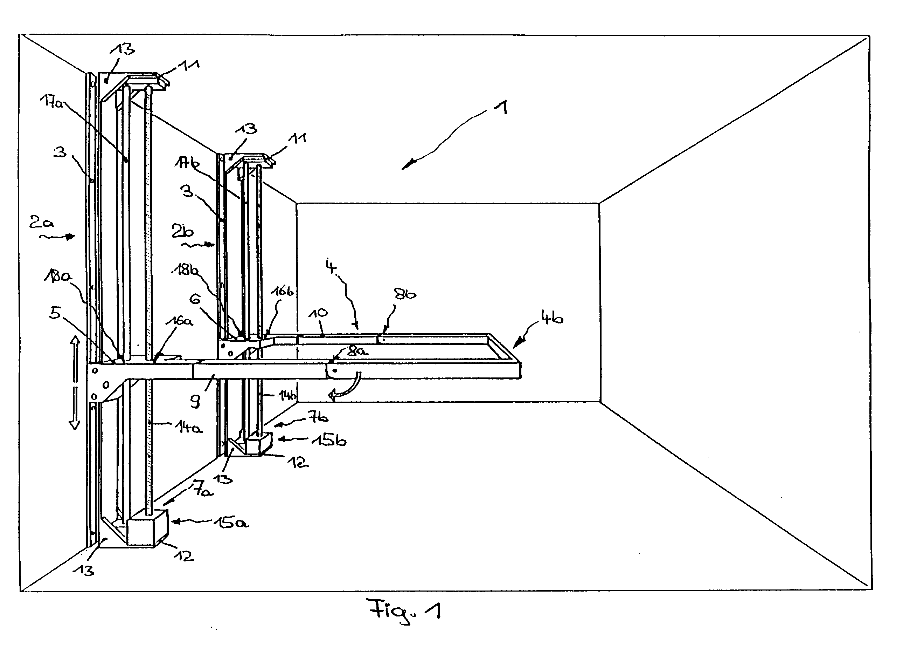

Das Schwebebett 1 in Fig. 1 weist zwei parallel und im Abstand, entsprechend einer Bettrahmenbreite, zueinander angeordnete Führungsschienen 2a, 2b, die an einer tragfähigen Zimmerwand mittels Schrauben 3 befestigt sind, einen Bettrahmen 4, der an seinen zwei Bettrahmenecken 5, 6, welche sich auf der wandseitigen Stirnseite des Bettrahmens 4 befinden, an den zwei Führungsschienen 2a, 2b in vertikaler Richtung beweglich gelagert ist, eine Hubvorrichtung 7a, 7b, die an den Bettrahmenecken 5, 6 angreift, und eine Überlastsicherung 8 auf, die jeweils auf gleicher Höhe in den zwei Längsseiten 9, 10 des Bettrahmens 4 angeordnet ist. Jede der zwei Führungsschienen 2a, 2b, ist als Doppel-T-Träger ausgebildet, der eine Länge entsprechend der Zimmerhöhe aufweist. Am oberen und unteren Ende des Doppel-T-Trägers ist im wesentlichen senkrecht zur Vorderseite des Doppel-T-Trägers eine Deckenplatte 11 und eine Fußplatte 12 befestigt, die entlang einer tragfähigen Decke bzw. einem tragfähigen Boden verläuft. Um ein Verbiegen der Deckplatte 11 und der Fußplatte 12 zu verhindern, sind zu deren Abstützung jeweils zwei im wesentlichen rechtwinklige Dreiecke 13 für jede Deckplatte 11 und Fußplatte 12 vorgesehen, wobei die zwei Dreiecke in einem Abstand entsprechend der Breite der Führungsschiene so angeordnet sind, daß die eine Seite des rechtwinkligen Dreieckes mit der Vorderseite der Führungsschiene 2a, 2b verbunden ist und die andere Seite des rechtwinkligen Dreieckes mit der Deckplatte 11 bzw. der Fußplatte 12 verbunden ist. Die Deckplatte 11 bzw. die Fußplatte 12 könnten aber auch mit den zwei Dreiecken 13 einförmig ausgebildet sein. Die an dem Doppel-T-Träger befestigte Deckplatte 11 und Fußplatte 12 weist vorzugsweise eine Länge von 30cm auf. Durch die Ausgestaltung der Führungsschiene 2a, 2b mit einem derartigen Fußteil, wird gewährleistet, daß ein Umkippen der Führungsschiene 2a, 2b in den Raum nahezu unmöglich ist, vorausgesetzt die Führungsschiene 2a, 2b ist nicht befestigt, denn durch das Aufliegen des verbiegesicheren Fußteils, wird die parallel zur Bodenwandkante liegende Drehachse parallel zur Stirnseite des Fußteiles verschoben. Dadurch kann jedoch die Führungsschiene 12a, 12b, die bis zur Decke reicht, nicht mehr in den Raum kippen, da durch das Verschieben der Drehachse zur Stirnseite des Fußteils, das an der Decke anstehende Ende der Führungsschiene 12a, 12b beim Verkippen, in die Decke gedrückt wird. Durch diese Ausgestaltung der Führungsschiene, wird ein selbsthemmender Verkippmechanismus geschaffen, der beim Verkippen der Führungsschiene 2a, 2b, dieselbe verkeilt. Um ein Verkippen der Führungsschienen 2a, 2b, zu verhindern, ist es auch möglich, die Deckplatte 11 bis zur gegenüberliegenden Wand zu verlängern. Ferner kann diese verlängerte Deckplatte noch bis zum Boden entlang der gegenüberliegenden Wand geführt werden, um den an der Deckenkante auftretenden Druck, beim Umkippen der Führungsschiene 2a, 2b, zu vermindern.

Die Hubvorrichtung 7a, 7b, welche an den Bettrahmenkanten 5, 6 angreift, weist zwei Hubspindeln 14a, 14b, die jeweils parallel und in einem entsprechenden Abstand von der Vorderseite des jeweiligen Doppel-T-Trägers angeordnet sind und die an der Deckplatte 11 und der Fußplatte 12 des jeweiligen Doppel-T-Trägers drehbar gelagert sind, zwei nicht-dargestellte Elektromotoren 15a, 15b, die jeweils an der Fußplatte 12 der jeweiligen Führungsschiene 2a, 2b angeordnet und mit der jeweiligen Hubspindel 14a, 14b gekoppelt sind, und zwei Hubspindelmuttern 16a, 16b auf, die in den jeweiligen Bettrahmenecken 5, 6 angeordnet sind und die sich im Eingriff mit den jeweiligen Hubspindeln 14a, 14b befinden. Um eine ungewollte Bewegung des Bettrahmens in vertikaler Richtung zu vermeiden, sind die Hubspindeln 14a, 14b selbsthemmend ausgebildet, so daß sich diese Hubspindeln 14a, 14b nicht unter der Einwirkung des Gewichtes des Bettrahmens 4 mit dem Bett und den darauf befindlichen Personen drehen können. Damit wird auch eine Motorbremsung überflüssig.

Um ein Auslenken der Längsseiten 9, 10 des Bettrahmens 4 in horizontaler Richtung zu unterbinden, ist an jeder Führungsschiene 2a, 2b eine Führungsstange 17a, 17b vorgesehen, die zwischen der jeweiligen Führungsschiene 2a, 2b und der jeweiligen Hubspindel 14a, 14b angeordnet ist und deren erstes Ende mit der Deckplatte 11 und deren zweites Ende mit der Fußplatte 12 verbunden ist. An der jweiligen Bettrahmenecke 5, 6 ist jeweils eine Führungsbohrung 18a, 18b vorgesehen, durch die die jeweilige Führungsstange 17a, 17b verläuft. Die an der Deckplatte 11 und der Fußplatte 12 der jeweiligen Führungsschiene 2a, 2b befestigte Führungsstange 17a, 17b dient gleichzeitig zur Versteifung der gesamten Führungsschienenkonstruktion.

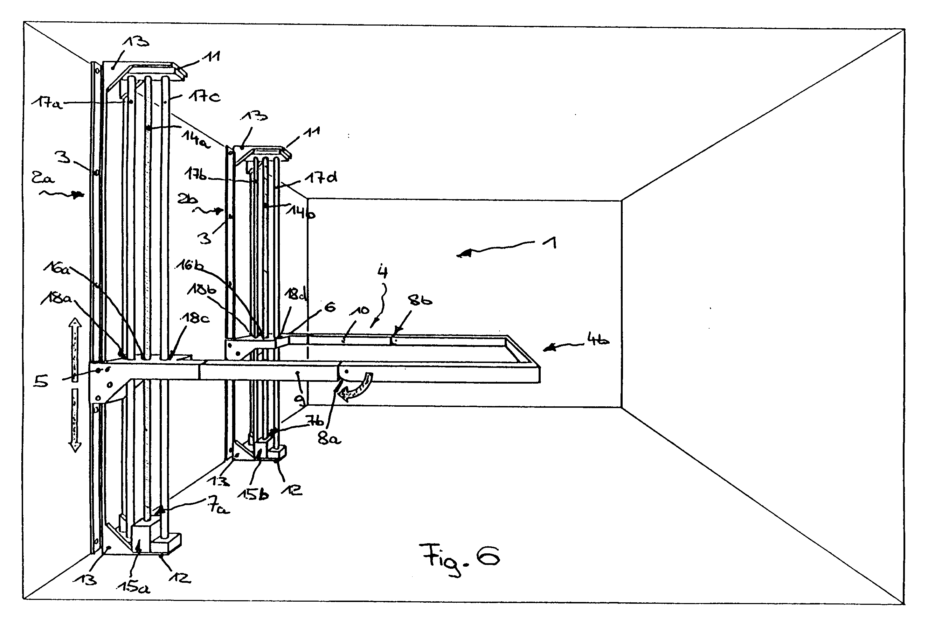

Um ein Angreifen von eventuell auftretenden Scherkräften an den jeweiligen Hubspindeln 14a, 14b zu unterbinden, ist bei dem Ausführungsbeispiel gemäß Fig. 6 an jeder Führungsschiene 2a, 2b eine weitere Führungsstange 17c, 17d vorgesehen, die parallel zu der jeweiligen Führungsschiene 2a, 2b und in einem vorbestimmten Abstand vor der jeweiligen Hubspindel 14a, 14b angeordnet ist. Die jeweilige Führungsstange 17c, 17d ist ebenfalls mit ihrem ersten Ende mit der Deckplatte 11 und mit ihrem zweiten Ende mit der Fußplatte 12 der jeweiligen Führungsschiene 2a, 2b verbunden. An der jeweiligen Bettrahmenecke 5, 6 ist jeweils eine Führungsbohrung 18c, 18d vorgesehen, durch die die jeweilige Führungsstange 17c, 17d verläuft. Um ein Einwirken von Scherkräften auf die Hubspindeln 14a, 14b zu verhindern, ist es aber auch möglich, daß die jeweilige Hubspindelmutter 16a, 16b in der jeweiligen Bettrahmenecke 5, 6 beweglich angeordnet ist, so daß die auf die jweiligen Hubspindeln 14a, 14b wirkenden Scherkräfte beseitigt bzw. erheblich reduziert werden.

Die nicht dargestellten Elektromotoren 15a, 15b sind so ausgebildet, daß sie synchron zueinander drehen. Dies kann dadurch erreicht werden, daß mit zunehmender Drehmomentbelastung des Motors sich die Drehzahl desselben verringert. Damit wird sichergestellt, daß der mit der größeren Drehzahl laufende Motor seine Drehzahl aufgrund der größer werdenden Drehmomentbelastung reduziert. Es kann aber auch ein Motor verwendet werden, der über eine Übertragungswelle die beiden Hubspindeln 14a, 14b gleichzeitig kämmt.

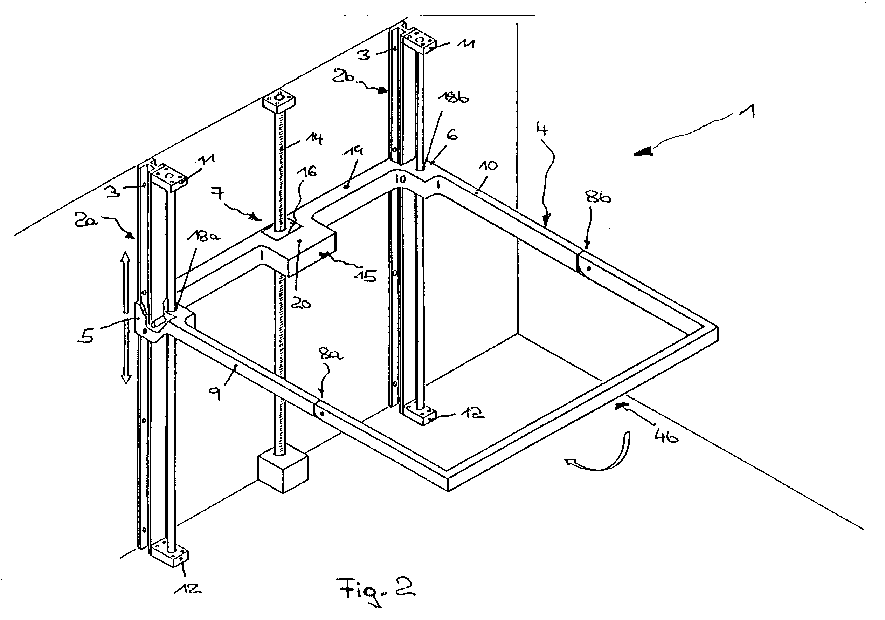

Ein ähnliches Ausführungsbeispiel des Schwebebetts 1 ist in Fig. 2 gezeigt. Der Unterschied des Schwebebettes 1 in Fig. 2 zum Schwebebett 1 in Fig. 1 besteht in der Ausgestaltung der Hubvorrichtung 7a, 7b, welche nachfolgend näher beschrieben wird. Alle übrigen Merkmale, die die gleichen Bezugszeichen aufweisen, werden nicht mehr beschrieben. Die Hubvorrichtung 7 in Fig. 2 setzt sich aus einer Zahnstange 14, einem nicht-dargestellten Elektromotor 15 und einem nicht-dargestellten selbsthemmenden Antriebsrad zusammen. Die Bettrahmenecken 5, 6 sind durch einen T-förmigen Rahmen 19 miteinander verbunden, wobei der sich in den Raum erstreckende Rahmenteil 20 den Elektromotor 15 mit dem daran gekoppelten selbsthemmenden Antriebsrad 16 aufnimmt. Im Bereich des Antriebsrades 16 weist der T-förmige Rahmen 19 einen Durchbruch in vertikaler Richtung auf, durch den die Zahnstange 14 verläuft, die an ihrem einen Ende an der Zimmerdecke und an ihrem anderen Ende am Fußboden befestigt ist und parallel zu den zwei Führungsschienen 2a, 2b verläuft. Das Antriebsrad 16 befindet sich in Eingriff mit der Zahnstange 14 und kämmt dieselbe im Betrieb. Dadurch, daß das Antriebsrad 16 selbsthemmend ausgebildet ist, wird eine Bewegung des Bettrahmens 1 in vertikaler Richtung bei ausgeschaltetem Elektromotor 15 unterbunden.

Um die Motorleistung zu reduzieren, die für das Bewegen des Schwebebettes in vertikaler Richtung benötigt wird, ist es auch möglich, daß ein Gegengewicht entsprechend dem Schwebebettgewicht vorgesehen ist. Dieses Gegengewicht weist ebenfalls Hubspindelmuttern auf, die sich jeweils in Eingriff mit einer Gegengewichthubspindel befinden. Diese jeweilige Gegengewichthubspindel ist mit der jeweiligen Hubspindel 14a, 14b gekoppelt, so daß mit dem Heben des Schwebebettes 1 das Gegengewicht abgesenkt wird und mit dem Absenken des Schwebebettes 1 das Gegengewicht hochgehoben wird. Dieses Gegengewicht kann zwischen den beiden Führungsschienen 2a, 2b angeordnet sein.

Für einen Motbetriebsfall ist es vorgesehen, daß das Schwebebett 1 mittels einer Kurbel in der vertikalen Richtung verstellt werden kann. Diese Kurbel kann mit den Hubspindeln 14a, 14b gekoppelt werden und kämmt diese, wenn die Kurbel gedreht wird.

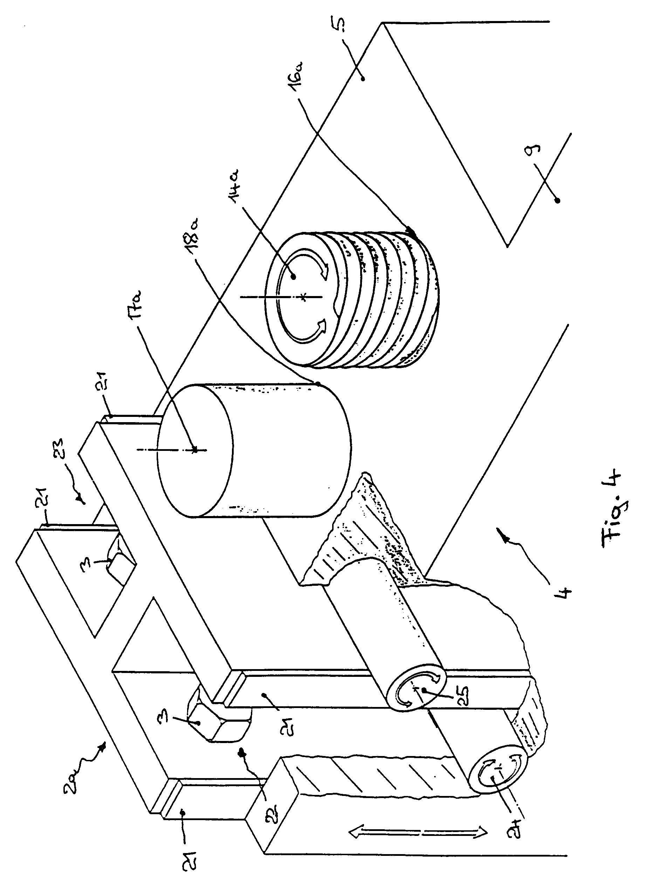

Eine vergrößerte Darstellung des in vertikaler Richtung beweglich gelagerten Bettrahmens 4 an der Führungsschiene 2a gemäß Ausführungsbeispiel nach Fig. 1 ist in Fig. 4 gezeigt. Die als Doppel-T-Träger ausgebildete Führungsschiene 2a weist an ihren vier seitlichen Stirnflächen jeweils einen Teflonstreifen 21 zur Reibungsverminderung auf. Die wandseitige Stirnfläche des Bettrahmens 4 weist eine in vertikaler Richtung durchgängige Aussparung auf, deren Aussparungsbreite und Aussparungstiefe der Breite und Tiefe des Doppel-T-Trägers entspricht, so daß die Aussparung des Bettrahmens 4 den Doppel-T-Träger aufnimmt und die zwei Aussparungsseiten an den Teflonstreifen 21 des Doppel-T-Trägers anliegen. Durch die Ausbildung der Führungsschiene 2a weist diese zwei seitliche Führungsnuten 22, 23 auf, in die jeweils zwei in vertikaler Richtung beabstandete Rollkörper 24 eingreifen und die am Bettrahmen drehbar gelagert sind. In vertikaler Richtung mittig zu diesen zwei Rollkörpern 24 ist ein weiterer zylindrischer Rollkörper 25 zwischen der Vorderseite der Führungsschiene 2a und der ihr gegenüberliegenden Aussparungswand angeordnet. Durch diesen zylindrischen Rollkörper 25 und durch die vier Rollkörper 24 ist der Bettrahmen 4 an der jeweiligen Führungsschiene 2a, 2b in vertikaler Richtung beweglich gelagert.

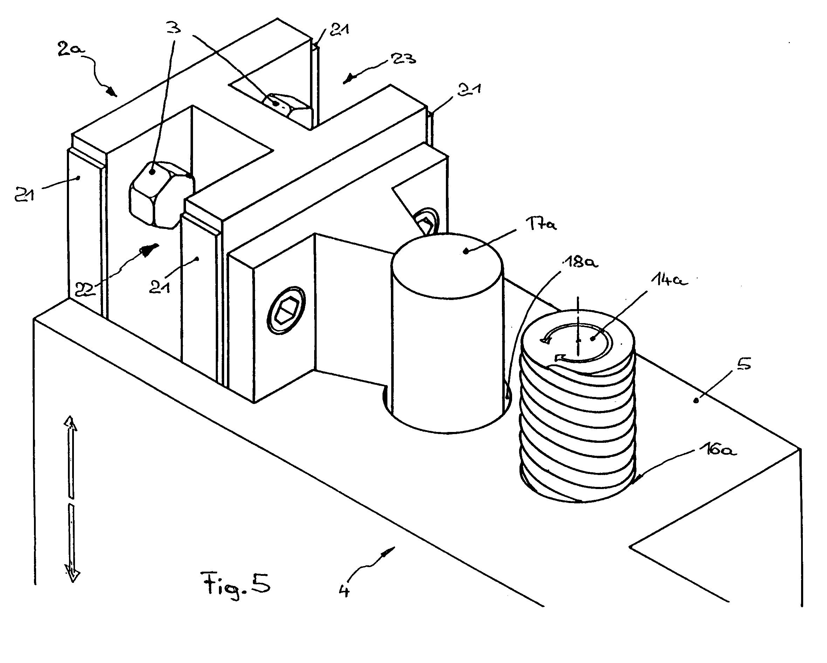

Fig. 5 zeigt ein anderes Ausführungsbeispiel für die Befestigung der Führungsstange 17a oder 17b. Die Führungsstange 17a, 17b ist nicht an ihren Enden, sondern an ihrer Außenseite der Länge nach mit einem trapezförmigen T-Träger 26 verbunden, der seinerseits an der Vorderseite der Führungsschiene 2a, 2b befestigt ist. Dementsprechend weist die Führungsbohrung 18a, b einen Einschnitt auf, der sich entsprechend der Form des trapezförmigen Trägers 26 in Richtung der Aussparung aufweitet.

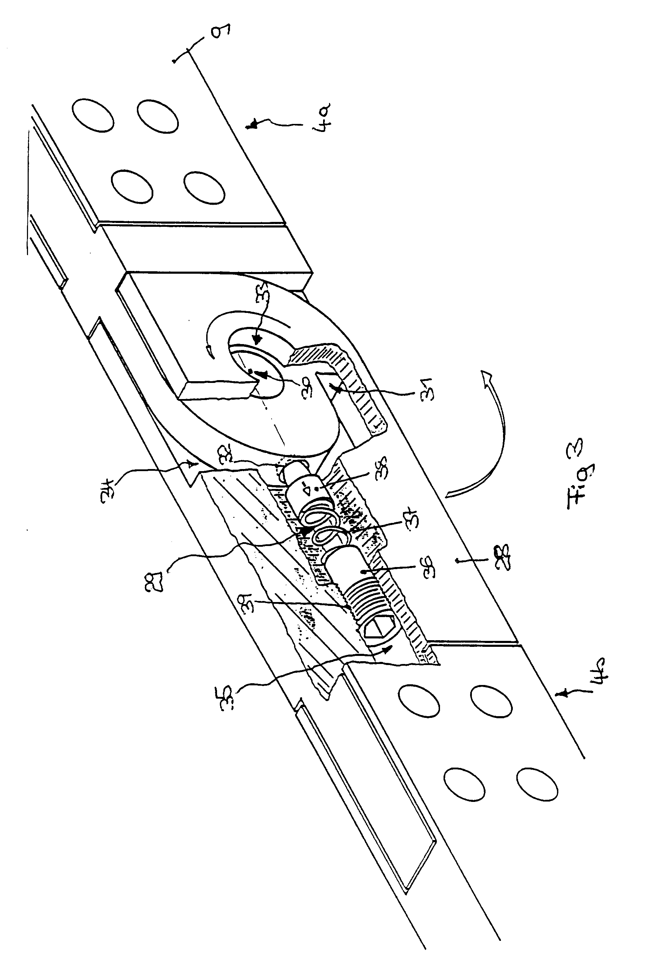

Die in Fig. 1 und Fig. 2 dargestellte Überlastsicherung 8a, 8b welche mittig in die Längsseiten 9, 10 des Bettrahmens 4 eingefügt sind, teilen den Bettrahmen 4 in einen an der Führungsschiene beweglich gelagerten feststehenden Bettrahmenteil 4a und in einen schwenkbaren Bettrahmenteil 4b. Eine detaillierte Darstellung der Überlastsicherung 8a ist in Fig. 3 gezeigt. Die Überlastsicherung 8a setzt sich aus einem feststehenden Drehgelenkteil 27, einem schwenkbaren Drehgelenkteil 28 und einer Kraftübertragungseinrichtung 29 zusammen, wobei das feststehende Drehgelenkteil 27 an der Längsseite 9 des feststehenden Bettrahmenteils 4a und das schwenkbare Drehgelenkteil 28 an der Längsseite 9 des schwenkbaren Bettrahmenteils 4b befestigt ist. Das freistehende Ende des feststehenden Drehgelenkteils 27 weist mittig eine Drehgelenkbohrung 30 sowie unterhalb dieser Bohrung am unteren Ende des feststehenden Drehgelenkteils 27 eine Aussparung 31 auf, wobei die ganze vordere Hälfte ausgehend von dieser Aussparung 31 kurvenförmig ausgebildet ist, und einen Scheitelpunkt aufweist, der auf der Symmetrielinie der Drehgelenkbohrung liegt. Die Stirnseite des feststehenden Drehgelenkteils 27 weist am Scheitelpunkt eine Vertiefung 32 auf. Das schwenkbare Drehgelenkteil 28 weist an seinem vorderen Ende eine mittig zur Drehgelenkteilhöhe liegende, durchgehende Gelenkbohrung 33 sowie eine mittig zur Drehgelenkteilbreite liegende und senkrecht zur Drehgelenkbohrung 33 durchgehend verlaufende Aussparung 34 entsprechend der Länge und Breite des freistehenden Endes des feststehenden Drehgelenkteilles 27 auf. Im eingebauten Zustand ist das freistehende Drehgelenkteil 27 in der Aussparung 34 des schwenkbaren Drehgelenkteils 28 so angeordnet, daß die Drehgelenkbohrung 30 des feststehenden Drehgelenkteils 27 konzentrisch zur Drehgelenkbohrung 33 des schwenkbaren Drehgelenkteils 28 liegt und diese durch einen nicht-dargestellten Stift miteinander verbunden sind. Damit ist der mit dem schwenkbaren Drehgelenkteil 28 verbundene schwenkbare Bettrahmen 4b um die Symmetrieachse der beiden konzentrisch zueinanderliegenden Drehgelenkbohrungen 30, 33 schwenkbar. Im Inneren des schwenkbaren Drehgelenkteils 28 ist mittig zur Breite und Höhe desselben eine in Längsrichtung des schwenkbaren Drehgelenkteils 28 verlaufende Durchgangsbohrung 35 vorgesehen. In dieser Durchgangsbohrung 35 ist die Kraftübertragungseinrichtung 29 angeordnet. Die Kraftübertragungseinrichtung 29 setzt sich aus einer Verstellschraube 36, einer Druckfeder 37 und einem bewegbaren Körper 38, der als kegelförmiger Stift ausgebildet ist, zusammen. Die Durchgangsbohrung 35 weist an ihrem hinteren Ende ein Gewinde 39 auf, durch das die Verstellschraube 36 in Längsrichtung der Durchgangsbohrung 35 verstellt werden kann. Am vorderen Ende der Verstellschraube 36 ist die Druckfeder 37 und der bewegliche Körper 38 in der Durchgangsbohrung 35 angeordnet. Durch die Druckfeder 37 zwischen der Verstellschraube 36 und dem beweglichen Körper 38, ist der letztgenannte entlang der Durchgangsbohrung 35 bewegbar. Befindet sich der schwenkbare Bettrahmenteil 4b in seiner Grundposition, d.h. die Überlastsicherung 8a, 8b ist nicht ausgelöst, so rastet der bewegliche Körper 38 in die Vertiefung 32 des feststehenden Drehgelenkteils 27 ein. Wirkt auf das schwenkbare Bettrahmenteil 4b eine vorbestimmte Kraft ein, so wird der bewegliche Körper 38 aus der Vertiefung 32 herausgedrückt und in die Durchgangsbohrung 35 des schwenkbaren Drehgelenkteils hineingeschoben. Damit löst die Überlastsicherung 8a und b aus und das schwenkbare Bettrahmenteil 4b klappt nach unten. Während des Herunterklappens des schwenkbaren Bettrahmenteils 4b gleitet der bewegliche Körper 38 auf der Stirnfläche des kurvenförmig ausgebildeten vorderen Endes bis zur Aussparung 31. Durch die Aussparung 31 wird der Klappbereich des schwenkbaren Bettrahmenteils 4b beschränkt. Um den schwenkbaren Bettrahmenteil 4b wieder in die Grundstellung zu überführen, muß nur der schwenkbare Bettrahmenteil 4b nach oben geklappt werden, bis der bewegliche Körper 38 wieder in der Vertiefung 32 des feststehenden Drehgelenkteils 27 einrastet. Durch das Verdrehen der Verstellschraube 36 kann dieselbe in der Längsrichtung der Durchgangsbohrung 35 verstellt werden, wodurch die Druckfeder 37 mehr bzw. weniger zusammengedrückt wird und dadurch die Kraft, bei der die Überlastsicherung 8a, 8b auslöst, eingestellt wird. Die Kraft, bei der der bewegliche Körper 38 aus der Vertiefung 32 herausgedrückt wird, hängt nicht nur von der Verstellschraube 36 und der Druckfeder 37 sondern auch von der Ausformung der Vertiefung 32 ab. Ebenso wird die benötigte Kraft für das Hochklappen des schwenkbaren Bettrahmenteils 4 von der kurvenförmigen Ausgestaltung des freien Endes des freistehenden Drehgelenkteils 27 bestimmt. Durch die kurvenförmige Ausbildung des freistehenden Drehgelenkteils 27 in Fig. 3 ist eine wesentlich geringere Kraft zum Hochklappen des schwenkbaren Bettrahmenteils 4b nötig als zum Auslösen der Überlastsicherung 8a, b.

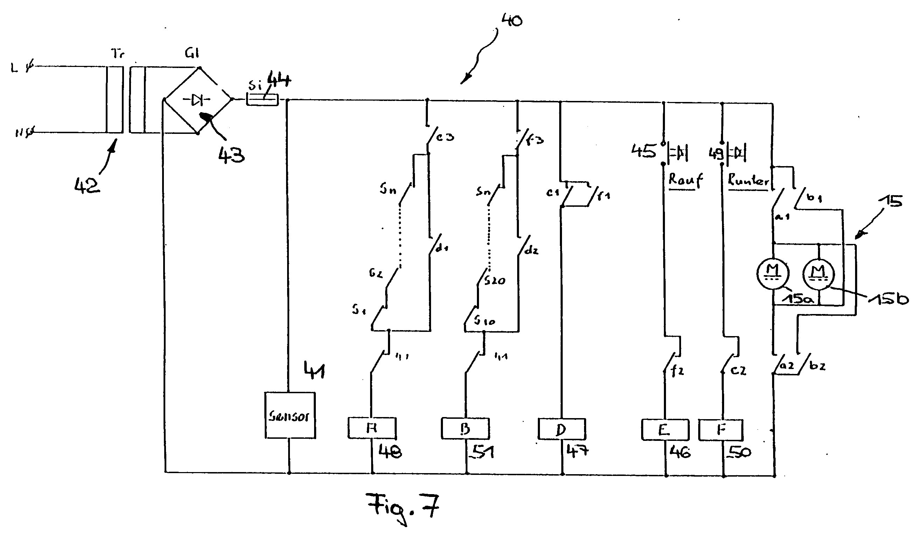

In einer der zwei Nuten 22, 23 der Führungsschiene 2a sind nicht-dargestellte Endschalter in einem Abstand von jeweils 30cm in vertikaler Richtung an der Führungsschiene 2a befestigt. Am vorderen Ende des Bettrahmens 4 ist ein nicht-dargestellter Taststift am Bettrahmen so befestigt, daß er in die Führungsnut 22 oder 23 ragt und bei der Bewegung des Schwebebettes 4 in vertikaler Richtung einen auf gleicher Höhe befindlichen Endtaster betätigt. Die an der Führungsschiene 2a befestigten Endschalter sind an einer Steuereinrichtung 40, die in Fig. 7 dargestellt ist, angeschlossen. Ebenfalls an der Steuereinrichtung 40 ist der elektrische Antrieb 15, 15a, 15b, sowie ein an der Decke anbringbarer Sensor 41 angeschlossen. Die Steuerschaltung 40 weist einen Transformator 42, einen an der Sekundärseite des Transformators 42 angeschlossenen Brückengleichrichter 43 zum Erzeugen einer Gleichspannung, die mit einer Sicherung 44 abgesichert ist und eine Relaissteuerung zum Steuern des elektrischen Antriebs 15; 15a, 15b auf. Die Relaissteuerung zum Steuern des elektrischen Antriebs 15; 15a, 15b in Aufwärtsrichtung enthält einen Taster 45, ein daran angeschlossens Relais 46, ein Zeitrelais 47, das über den Arbeitskontakt des Relais 46 mit der Gleichspannung verbunden wird, und ein Relais 48, das über eine Schalterreihenschaltung mit der Gleichspannungsquelle verbunden wird, wobei die Schalterreihenschaltung einen Arbeitskontakt des Relais 46, die an der Führungsschiene 2a befestigten Endschalter, einen Arbeitskontakt des Sensors 41 sowie einen Arbeitskontakt des Relais 47 enthält, der parallel zu den in Reihe geschaltenen Endschaltern liegt. Die Relaissteuerung zum Steuern des elektrischen Antriebs 15, 15a, 15b in Abwärtsrichtung enthält einen Taster 49, ein daran angeschlossenes Relais 50, das Relais 47, das über einen Arbeitskontakt des Relais 50 mit der Gleichspannung verbunden wird, und ein Relais 50, das über eine Reihenschaltung mit der Gleichspannung verbunden wird, wobei die Schalterreihenschaltung einen Arbeitskontakt des Relais 47, die auf der Führungsschiene 2a befestigten Endschalter, einen Arbeitskontakt des Sensors 41 sowie einen Arbeitskontakt des Zeitrelais 47 enthält, der parallel zu den in Reihe geschalteten Endschaltern liegt. Die zwei Relais 46 und 50 sind gegenseitig verriegelt. Der elektrische Antrieb 15, 15a, 15b wird über eine Wendeschaltung, die die Arbeitskontakte des Relais 48 und des Relais 51 enthält, mit der Gleichspannung verbunden.

Im folgenden wird die Wirkungs- und Funktionsweise der Steuereinrichtung 40 näher erläutert.

Beim Einschalten der Steuereinrichtung wird die Primärseite des Trafos 42 durch einen nicht-dargestellten Schalter mit dem Netz verbunden. Soll nun das Bett in Aufwärtsrichtung bewegt werden, so wird der Taster 45 gedrückt, wodurch das Relais 46 betätigt wird. Durch die Betätigung des Relais 46 schließen bzw. öffnen die Arbeitskontakte desselben, wodurch das Zeitrelais 47 an der Gleichspannung angeschlossen wird und die Arbeitskontakte desselben schließen. Nach einer vorbestimmten Zeitdauer z.B. nach einer Sekunde werden die Arbeitskontakte des Zeitrelais 47 wieder geöffnet. Da das Bett zum Zeitpunkt des Drückens des Tasters 45 sich in einer Position befindet, bei der einer der Endschalter durch den Taststift betätigt wird, kann das Relais 48 nur über die Arbeitskontakte des Relais 46 und des Zeitrelais 47 eingeschaltet werden, da die Reihenschaltung der Endschalter unterbrochen ist. Mit dem Betätigen des Zeitrelais 47 wird das Relais 48 betätigt, wodurch sich die Arbeitskontakte desselben schließen und der elektrische Antrieb 15, 15a, 15b mit der Gleichspannungsquelle verbunden wird. Dadurch werden die Hubspindeln 14a, 14b in Drehung versetzt und kämmen die Hubspindelmutter 16a, 16b, wodurch der Bettrahmen in vertikaler Richtung nach oben bewegt wird. Beim Nachobenbewegen des Bettrahmens schließt der durch den Taststift betätigte Endschalter, wodurch das Relais 48 über die Reihenschaltung der Endschalter mit der Gleichspannung verbunden wird. Nach der eingestellten Zeit des Zeitrelais 47 wird dessen Arbeitskontakt geöffnet. Der Bettrahmen bewegt sich solange nach oben, bis der Taststift den nächsten Endschalter betätigt, wodurch der Endschalter geöffnet wird und damit das Relais 48 von der Gleichspannung getrennt wird. Damit wird der elektrische Antrieb 15, 15a, 15b von der Gleichspannung getrennt und hält an. Das Schwebebett 4 kann nur dann bis zur nächsten Position gefahren werden, wenn der Taster 45 losgelassen und anschließend erneut betätigt wird. Soll das Schwebebett in Abwärtsrichtung bewegt werden, so muß der Taster 49 betätigt werden, wodurch über das Relais 50, das Zeitrelais 47 und das Relais 51 der elektrische Antrieb 15, 15a, 15b durch die Arbeitskontakte des Relais 51 mit der Gleichspannung verbunden werden.

Aus Sicherheitsgründen ist die Steuereinrichtung 40 derart ausgebildet, daß zum einen das Schwebebett 4 nur immer bis zum nächsten Endschalter bewegbar ist unabhängig davon wie lange der Taster 45 oder 49 betätigt wird, um so beim Abwärtsbewegen des Schwebebettes 4 eine Beschädigung der darunterliegenden Gegenstände, aufgrund einer Unachtsamkeit des Benutzers, zu verhindern und daß zum anderen das Schwebebett 4 nicht mit dem elektrischen Antrieb 15, 15a, 15b in vertikaler Richtung bewegbar ist, wenn sich eine Person auf dem Schwebebett 4 befindet. Dies wird dadurch erreicht, daß der Sensor 41, der einen Infrarotsensor aufweist, beim detektieren einer Wärmequelle auf dem Schwebebett 4 seine Arbeitskontakte öffnet, wodurch das Relais 48 und das Relais 51 nicht mehr ansteuerbar ist und dadurch der elektrische Antrieb 15, 15a, 15b von der Spannungsversorgung getrennt ist.

Neben den Sicherheitsvorkehrungen durch die elektrische Steuereinrichtung 40 sind weitere Sicherheitsvorkehrungen durch die Konstruktion des Bettrahmens 4 sowie durch die Hubspindel 14a, 14b bzw. das Antriebsrad 16 realisiert. Wie oben beschrieben weist der Bettrahmen zwei Überlastsicherungen 8a, 8b auf, wodurch der vordere Bettrahmenteil 4b nach unten klappt, wenn eine zu große Kraft am vorderen Bettrahmenteil 4b auftritt. Damit wird ein Verbiegen des Bettrahmens 4 und eine Deformierung der Führungsschiene 2a, 2b verhindert. Der Klappbereich des schwenkbaren Bettrahmenteils 4b kann durch die Ausbildung des Anschlags 31 des feststehenden Drehgelenkteils 27 festgelegt werden. Es ist jedoch auch möglich, daß ein Anschlagbügel am feststehenden Bettrahmenteil 4a befestigbar ist, der derart ausgebildet ist, daß nach dem Auslösen der Überlastsicherung 8a, 8b das schwenkbare Bettrahmenteil 4b nach einem vorbestimmten Klappwinkel am Anschlagbügel anliegt. Dadurch wird verhindert, daß sich Personen, die sich am schwenkbaren Bettrahmenteil 4b befinden durch das Herunterklappen des schwenkbaren Bettrahmenteils 4b verletzen.

Durch Verwendung der selbsthemmenden Hubspindel 14a, 14b bzw. des selbsthemmenden Antriebsrades 16 wird eine selbständige Bewegung des Bettrahmens 4 in vertikaler Richtung verhindert, wenn der elektrische Antrieb 15, 15a, 15b nicht eingeschaltet ist bzw. ein Netzausfall eintritt.

## Patentansprüche

1. Schwebebett (1) mit einem höhenverstellbaren Bettrahmen (4), und einer Hubvorrichtung (14, 16, 16; 14a, 14b, 15a, 15b, 16a, 16b) zum Bewegen des Bettrahmens in vertikaler Richtung**, dadurch gekennzeichnet,** daß eine an der Wand befestigbare vertikal verlaufende Führungseinrichtung (2a, 2b) vorgesehen ist, an der der Bettrahmen (4) mit einer Stirnseite (5, 6) in vertikaler Richtung beweglich gelagert ist, daß die Hubvorrichtung (14, 15, 16; 14a, 14b, 15a, 15b, 16a, 16b) mit einem selbsthemmenden Antrieb (14a, 14b, 16a, 16b; 14, 16) versehen ist und derart ausgebildet und angeordnet ist, daß sie am Bettrahmen (4) an der genannten Stirnseite (5, 6) angreift.

2. Schwebebett nach Anspruch 1, **dadurch gekennzeichnet,** daß die Führungseinrichtung (2a, 2b) mindestens zwei in einem entsprechenden Abstand parallel zueinander angeordnete Führungsschienen (2a, 2b) mit jeweils einem L-förmigen Fußteil (12) aufweist, wobei das Fußteil (12) mindestens eine horizontale Länge von 20cm aufweist, um ein Umkippen der bis zur Decke reichenden Führungsschiene (2a, 2b) zu verhindern.

3. Schwebebett nach Anspruch 2, **dadurch gekennzeichnet,** daß das Fußteil (12) eine horizontale Länge von vorzugsweise 30cm aufweist.

4. Schwebebett nach Anspruch 2 oder 3, **dadurch gekennzeichnet,** daß die Führungsschiene (2a, 2b) ein L-förmiges Kopfteil (11) aufweist, wobei das Kopfteil (11) mindestens eine horizontale Länge von 20cm aufweist.

5. Schwebebett nach Anspruch 4, **dadurch gekennzeichnet**, daß das Kopfteil (11) eine horizontale Länge aufweist, die bis zu einer, der Führungsschiene (2a, 2b) gegenüberliegenden Wand reicht.

6. Schwebebett nach einem der Ansprüche 1 bis 5, **dadurch gekennzeichnet,** daß die am Bettrahmen (4) angreifende Hubvorrichtung mit einem selbsthemmenden Antriebsrad (16) gekoppelt ist, wobei das Antriebsrad (16) eine parallel zur Führungsschiene (2a, 2b) und auf der Stirnseite (19) des Bettrahmens (4) angeordnete Zahnstange (14) kämmt.

7. Schwebebett nach einem der Ansprüche 1 bis 5, **dadurch gekennzeichnet,** daß der Antrieb (15a, 15b) mit einer parallel zur Führungsschiene (2a, 2b) drehbar gelagerten, selbshemmenden Hubspindel (14a, 14b) gekoppelt ist, die eine an der Stirnseite (5, 6) des Bettrahmens (4) angeordnete Hubspindelmutter (16a, 16b) kämmt.

8. Schwebebett nach Anspruch 6 oder 7, **dadurch gekennzeichnet,** daß der Antrieb ein elektrischer Motor ist.

9. Schwebebett nach Anspruch 7, **dadurch gekennzeichnet,** daß jeweils eine Hubspindel (14a, 14b) in einem entsprechenden Abstand von der Führungsschiene (2a, 2b) an deren L-förmigen Fußteil (12) und Kopfteil (11) drehbar gelagert ist.

10. Schwebebett nach einem der Ansprüche 1 bis 9, **dadurch gekennzeichnet,** daß der Bettrahmen (4) mindestens zwei Überlastschutzeinrichtungen (8a, 8b) auf gleicher Höhe zwischen der an der Führungseinrichtung (2a, 2b) beweglich gelagerten Stirnseite (5, 6; 19) und der ihr gegenüberliegenden freitragenden Stirnseite aufweist, um den zwischen der Überlastschutzeinrichtung (8a, 8b) und der freitragenden Stirnseite befindlichen Bettrahmenteil (4b) herunterzuklappen, wenn ein vorbestimmtes Drehmoment auf die Überlastschutzeinrichtung (8a, 8b) wirkt.

11. Schwebebett nach Anspruch 10, **dadurch gekennzeichnet,** daß das Drehmoment einstellbar ist, bei der die Überlastschutzsicherung (8a, 8b) anspricht.

12. Schwebebett nach Anspruch 10 oder 11, **dadurch gekennzeichnet,** daß die Überlastschutzeinrichtung als Drehgelenk ausgebildet ist, dessen erstes Drehgelenkstück (27) an seinem freistehenden Ende wenigstens teilweise ellipsenförmig ausgebildet ist, an der Stirnfläche des freistehenden Endes eine Vertiefung (32) und in einem entsprechenden Abstand vom freistehenden Ende eine Gelenkbohrung (30) aufweist und dessen zweites Drehgelenkstück (28) an der Drehgelenkbohrung (30) des ersten Drehgelenkstückes (27) drehbar gelagert ist und einen in Längsrichtung zur Drehachse des Drehgelenks verschiebbaren Körper (38) aufweist, der mit einer Kraftübertragungseinrichtung (36, 37) gekoppelt ist, die den verschiebbaren Körper (38) in Richtung der Drehachse drückt, wobei der bewegliche Körper (38) des zweiten Drehgelenkstücks (28) in einer Verriegelungsstellung in die Vertiefung (32) des ersten Drehgelenkstücks (27) einrastet und im Drehgelenkbereich des Drehgelenks entlang der Stirnfläche des ellipsenförmigen Endes des ersten Drehgelenkstücks (27) gleitet.

13. Schwebebett nach Anspruch 12, **dadurch gekennzeichnet,** daß sich die Kraftübertragungseinrichtung (36, 37) aus einer in Längsrichtung verstellbaren Schraube (36) und einer zwischen der Schraube (36) und dem verschiebbaren Körper (38) angeordneten Feder (37) zusammensetzt, wobei durch das Verdrehen der Schraube (36) das Drehmoment einstellbar ist, bei der das Drehgelenk aus der Verriegelungsstellung ausrastet.

14. Schwebebett nach einem der Ansprüche 10 bis 13, **dadurch gekennzeichnet,** daß am feststehenden Bettrahmenteil (4a) ein Stopper angeordnet ist, dessen Ende im Klappbereich liegt, um beim Auslösen der Überlastschutzsicherung (8a, 8b) ein vollständiges Herunterklappen des schwenkbaren Bettrahmenteils (4b) zu verhindern.

15. Schwebebett nach einem der Ansprüche 4 bis 14, **dadurch gekennzeichnet**, daß parallel zur jeweiligen Führungsschiene (2a, 2b) eine an derern Fußteil (12) und Kopfteil (11) befestigte Führungsstange (17a, 17b) vorgesehen ist, und daß der Bettrahmen (4) eine entsprechende Führungsbohrung (18a, 18b) aufweist, durch die die Führungsstange (17a, 17b) verläuft.

16. Schwebebett nach einem der Ansprüche 1 bis 15, **dadurch gekennzeichnet**, daß eine Steuereinrichtung (40) zum Verstellen des Bettrahmens (4) in vertikaler Richtung mit einem Lagesensor zum Erfassen der Bettrahmenposition vorgesehen ist, und daß die Steuereinrichtung (40) den Bettrahmen (4) an vorbestimmten Positionen im Hubbereich selbsttätig anhält.

17. Schwebebett nach Anspruch 16, **dadurch gekennzeichnet,** daß der Lagesensor als Endschalterkette ausgebildet ist, die an der Führungseinrichtung (2a, 2b) in vertikaler Richtung angeordnet ist.

18. Schwebebett nach einem der Ansprüche 16 oder 17, **dadurch gekennzeichnet,** daß die Steuereinrichtung (40) einen Sensor (41) zum Erfassen einer im Schwebebett befindlichen Wärmequelle aufweist.

## Claims

1. Suspended bed (1) with a height-adjustable bed frame (4) and a lifting device (14, 15, 16; 14a, 14b, 15a, 15b, 16a, 16b) for moving the bed frame in the vertical direction, characterized in that a vertically extending guide arrangement (2a, 2b) is provided, which can be fastened on the wall and on which the bed frame (4) is mounted movably in the vertical direction with one end side (5, 6), in that the lifting device (14, 15, 16; 14a, 14b, 15a, 15b, 16a, 16b) is provided with a self-locking drive (14a, 14b, 16a, 16b; 14, 16) and is designed and arranged in such a manner that it engages on the bed frame (4) on said end side (5, 6).

2. Suspended bed according to Claim 1, characterized in that the guide arrangement (2a, 2b) has, arranged parallel to one another at a corresponding spacing, at least two guide rails (2a, 2b) with in each case one L-shaped foot part (12), the foot part (12) having a horizontal length of at least 20 cm, in order to prevent tipping over of the guide rail (2a, 2b) which reaches to the ceiling.

3. Suspended bed according to Claim 2, characterized in that the foot part (12) has a horizontal length of preferably 30 cm.

4. Suspended bed according to Claim 2 or 3, characterized in that the guide rail (2a, 2b) has an L-shaped head part (11), the head part (11) having a horizontal length of at least 20 cm.

5. Suspended bed according to Claim 4, characterized in that the head part (11) has a horizontal length which reaches to a wall lying opposite the guide rail (2a, 2b).

6. Suspended bed according to one of Claims 1 to 5, characterized in that the lifting device which engages on the bed frame (4) is coupled to a self-locking drive wheel (16), the drive wheel (16) engaging a toothed rack (14) arranged parallel to the guide rail (2a, 2b) and on the end side (19) of the bed frame (4).

7. Suspended bed according to one of Claims 1 to 5, characterized in that the drive (15a, 15b) is coupled to a self-locking lifting spindle (14a, 14b) which is mounted rotatably parallel to the guide rail (2a, 2b) and which engages a lifting-spindle nut (16a, 16b) arranged on the end side (5, 6) of the bed frame (4).

8. Suspended bed according to Claim 6 or 7, characterized in that the drive is an electric motor.

9. Suspended bed according to Claim 7, characterized in that in each case one lifting spindle (14a, 14b) is mounted rotatably, at a corresponding spacing from the guide rail (2a, 2b), on the L-shaped foot part (12) and head part (11) of the latter.

10. Suspended bed according to one of Claims 1 to 9, characterized in that the bed frame (4) has at least two overload protection arrangements (8a, 8b) at the same height between the end side (5, 6; 19) mounted movably on the guide arrangement (2a, 2b) and the self-supporting end side lying opposite it, in order to fold down the bed frame part (4b) situated between the overload protection arrangement (8a, 8b) and the self-supporting end side when a predetermined torque acts on the overload protection arrangement (8a, 8b).

11. Suspended bed according to Claim 10, characterized in that the torque, at which the overload protection safety device (8a, 8b) responds, is adjustable.

12. Suspended bed according to Claim 10 or 11, characterized in that the overload protection arrangement is designed as a swivel joint, the first swivel joint piece (27) of which is designed at least partially elliptically at its freestanding end, has on the end face of the freestanding end a recess (32) and, at a corresponding spacing from the freestanding end, a joint bore (30), and the second swivel joint piece (28) of which is mounted rotatably on the swivel joint bore (30) of the first swivel joint piece (27) and has a body (38) which is displaceable in the longitudinal direction in relation to the swivel axis of the swivel joint and which is coupled to a force transmission arrangement (36, 37) which presses the displaceable body (38) in the direction of the swivel axis, the movable body (38) of the second swivel joint piece (28) engaging, in a locking position, in the recess (32) of the first swivel joint piece (27) and, in the swivel joint range of the swivel joint, sliding along the end face of the elliptical end of the first swivel joint piece (27).

13. Suspended bed according to Claim 12, characterized in that the force transmission arrangement (36, 37) consists of a screw (36) which is displaceable in the longitudinal direction and of a spring (37) which is arranged between the screw (36) and the displaceable body (38), the torque, at which the swivel joint disengages from the locking position, being adjustable by turning the screw (36).

14. Suspended bed according to one of Claims 10 to 13, characterized in that there is arranged on the fixed bed frame part (4a) a stopper, the end of which lies in the folding region, in order to prevent a complete folding down of the pivotable bed frame part (4b) when the overload protection safety device (8a, 8b) is released.

15. Suspended bed according to one of Claims 4 to 14, characterized in that a guide rod (17a, 17b) is provided parallel to the respective guide rail (2a, 2b), which rod is fastened to the foot part (12) and head part (11) thereof, and in that the bed frame (4) has a corresponding guide bore (18a, 18b), through which the guide rod (17a, 17b) runs.

16. Suspended bed according to one of Claims 1 to 15, characterized in that a control arrangement (40) for displacing the bed frame (4) in the vertical direction is provided with a position sensor for detecting the bed frame position, and in that the control arrangement (40) stops the bed frame (4) automatically in predetermined positions in the lifting range.

17. Suspended bed according to Claim 16, characterized in that the position sensor is designed as a limit switch chain which is arranged in the vertical direction on the guide arrangement (2a, 2b).

18. Suspended bed according to one of Claims 16 or 17, characterized in that the control arrangement (40) has a sensor (41) for detecting a heat source situated in the suspended bed.

## Revendications

1. Lit-ascenseur (1) comportant un cadre de lit (4) réglable en hauteur et un dispositif élévateur (14, 15, 16; 14a, 14b, 15a, 15b, 16a, 16b) pour déplacer le cadre de lit selon une direction verticale, **caractérisé** par le fait qu'il est prévu un dispositif de guidage (2a, 2b) qui s'étend verticalement, qui peut être fixé sur le mur et sur lequel le cadre de lit (4) est monté mobile verticalement avec un côté frontal (5, 6), que le dispositif élévateur (14, 15, 16 ; 14a, 14b, 15a, 15b, 16a, 16b) est équipé d'un dispositif d'entraînement autobloquant (14a, 14b, 16a, 16b ; 14, 16) et est réalisé et disposé de manière à agir sur le cadre de lit (4) sur le côté frontal (5, 6) mentionné.

2. Lit-ascenseur selon la revendication 1, **caractérisé** par le fait que le dispositif de guidage (2a, 2b) présente au moins deux rails de guidage (2a, 2b) disposés parallèlement l'un à l'autre à une distance appropriée et comportant chacun une pièce inférieure (12) en forme de L, la pièce inférieure (12) présentant au moins une longueur horizontale de 20 cm afin d'empêcher un basculement du rail de guidage (2a, 2b) qui s'étend jusqu'au plafond.

3. Lit-ascenseur selon la revendication 2, **caractérisé** par le fait que la longueur horizontale de la pièce inférieure (12) est de préférence de 30 cm.

4. Lit-ascenseur selon la revendication 2 ou 3, **caractérisé** par le fait que le rail de guidage (2a, 2b) présente une pièce supérieure (11) en forme de L, la pièce supérieure (11) présentant au moins une longueur horizontale de 20 cm.

5. Lit-ascenseur selon la revendication 4, **caractérisé** par le fait que la pièce supérieure (11) présente une longueur horizontale qui va jusqu'à un mur faisant face au rail de guidage (2a, 2b).

6. Lit-ascenseur selon l'une des revendications 1 à 5, **caractérisé** par le fait que le dispositif élévateur agissant sur le cadre de lit (4) est couplé à un pignon d'entraînement (16) autobloquant, le pignon d'entraînement (16) engrènant avec une crémaillère (14) disposée parallèlement au rail de guidage (2a, 2b) et sur le côté frontal (19) du cadre de lit (4).

7. Lit-ascenseur selon l'une des revendications 1 à 5, **caractérisé** par le fit que le dispositif d'entraînement (15a, 15b) est couplé à une vis hissante (14a, 14b) autobloquante qui est montée rotative parallèlement au rail de guidage (2a, 2b) et engrène avec un écrou (16a, 16b) disposé sur le côté frontal (5, 6) du cadre de lit (4).

8. Lit-ascenseur selon la revendication 6 ou 7, **caractérisé** par le fait que le dispositif d'entraînement est un moteur électrique.

9. Lit-ascenseur selon la revendication 7, caractérisé par le fait qu'une vis hissante (14a, 14b) est montée rotative à une distance appropriée du rail de guidage (2a, 2b), respectivement sur la pièce inférieure (12) et la pièce supérieure (11) en forme de L dudit rail.

10. Lit-ascenseur selon l'une des revendications 1 à 9, **caractérisé** par le fait que le cadre de lit (4) présente au moins deux dispositifs de protection contre les surcharges (8a, 8b) à la même hauteur entre le côté frontal (5, 6; 19) monté mobile sur le dispositif de guidage (2a, 2b) et le côté frontal opposé non soutenu afin de rabattre la partie de cadre de lit (4b) qui se trouve entre le dispositif de protection contre les surcharges (8a, 8b) et le côté frontal non soutenu lorsqu'un couple de rotation défini agit sur le dispositif de protection contre les surcharges (8a, 8b).

11. Lit-ascenseur selon la revendication 10, **caractérisé** par le fait qu'il est possible de régler le couple de rotation avec lequel le dispositif de protection contre les surcharges (8a, 8b) réagit.

12. Lit-ascenseur selon la revendication 10 ou 11, **caractérisé** par le fait que le dispositif de protection contre les surcharges est réalisé sous forme d'articulation tournante dont la première pièce (27) est réalisée au moins partiellement en forme d'ellipse en son extrémité libre, présente un creux (32) sur la surface frontale de l'extrémité libre et un trou d'articulation (30) à une distance appropriée de l'extrémité libre et dont la deuxième pièce (28) est montée rotative sur le trou d'articulation (30) de la première pièce (27) et présente un corps (38) qui peut être déplacé longitudinalement par rapport à l'axe de rotation de l'articulation tournante et est relié à un dispositif de transmission de force (36, 37) qui pousse le corps mobile (38) dans la direction de l'axe de rotation, le corps mobile (38) de la deuxième pièce (28) s'engageant, dans une position de verrouillage, dans le creux (32) de la première pièce (27) et glisse dans la zone d'articulation de l'articulation tournante le long de la surface frontale de l'extrémité elliptique de la première pièce (27).

13. Lit-ascenseur selon la revendication 12, **caractérisé** par le fait que le dispositif de transmission de force (36, 37) est composé d'une vis (36) réglable en direction longitudinale et d'un ressort (37) disposé entre la vis (36) et le corps mobile (38), la rotation de la vis (36) permettant le régler le couple de rotation avec lequel l'articulation tournante se dégage de la position de verrouillage.

14. Lit-ascenseur selon l'une des revendications 10 à 13, **caractérisé** par le fait qu'une butée est disposée sur la partie de cadre de lit (4a) fixe, butée dont l'extrémité se trouve dans la zone de rabattement afin d'éviter que la partie de cadre de lit (4b) pivotante se rabatte complètement vers le bas lors du déclenchement du dispositif de protection contre les surcharges (8a, 8b).

15. Lit-ascenseur selon l'une des revendications 4 à 14, **caractérisé** par le fait qu'une barre conductrice (17a, 17b) fixée sur la pièce inférieure (12) et la pièce supérieure (11) du rail de guidage (2a, 2b) est prévue parallèlement à chacun desdits rails et que le cadre de lit (4) présente un trou de guidage (18a, 18b) correspondant dans lequel passe la barre conductrice (17a, 17b).

16. Lit-ascenseur selon l'une des revendications 1 à 15, **caractérisé** par le fait qu'il est prévu un dispositif de commande (40) destiné à déplacer selon une direction verticale le cadre de lit (4) avec un détecteur de position destinée à déterminer la position du cadre de lit et que le dispositif de commande (40) arrête le cadre de lit (4) dans des positions prédéterminées dans la zone de levage.

17. Lit-ascenseur selon la revendication 16, **caractérisé** par le fait que le détecteur de position est réalisé sous forme de chaîne de commutateurs de fin de course qui est disposée sur le dispositif de guidage (2a, 2b) selon une direction verticale.

18. Lit-ascenseur selon l'une des revendications 16 ou 17, **caractérisé** par le fait que le dispositif de commande (40) présente un capteur (41) destiné à détecter une source de chaleur se trouvant dans le lit-ascenseur.
